# EUROPÄISCHE PATENTSCHRIFT

(11) **EP 2 753 410 B1**
(45) Veröffentlichungstag und Bekanntmachung des Hinweises auf die Patenterteilung: **20.07.2016**
(21) Anmeldenummer: 11760699.6
(22) Anmeldetag: 07.09.2011
(51) Int. Cl.: B01D 39/06

(54) **VERFAHREN ZUR FLAMMSCHUTZVERBESSERUNG IN FILTERANLAGEN**
METHOD FOR IMPROVING FLAME RESISTANCE IN FILTER SYSTEMS
PROCÉDÉ D'AMÉLIORATION DU POUVOIR IGNIFUGE DANS DES DISPOSITIFS DE FILTRAGE

(43) Veröffentlichungstag der Anmeldung: 16.07.2014
(73) Patentinhaber: Kompoferm GmbH, 33428 Marienfeld (DE)
(72) Erfinder: HALSTENBERG, Jörg, 32549 Bad Oeynhausen (DE)
(74) Vertreter: Schober, Mirko
(86) Internationale Anmeldenummer: PCT/EP2011/004501
(87) Internationale Veröffentlichungsnummer: WO 2013/034164

(56) Entgegenhaltungen:
- DE-A1- 19 802 622
- DE-A1- 19 847 971
- GB-A- 2 016 432
- US-A- 2 978 064
- US-A1- 2006 260 286

## Beschreibung

### TECHNISCHES GEBEIT

Die Erfindung betrifft ein Verfahren zur Flammschutzverbesserung in Filteranlagen.

### STAND DER TECHNIK

In vielen Bereichen der Technik und der Industrie entstehen Abluftströme, die mit Aerosolen belastet sind. Dabei handelt es sich bei den Aerosolen um fein verteilte feste oder flüssige Schwebeteilchen, die in den Abluftströmen mitgeführt werden und in der Regel aus diesen abgeschieden werden müssen.

Zum Abscheiden der Aerosolteilchen aus dem Luftstrom kommen häufig Filteranlagen zum Einsatz, die die Aerosolteilchen zurückhalten. Da die Aerosole oft brennbar sind und aufgrund ihrer großen spezifischen Oberfläche leicht zur Entzündung zeigen, kommt es dabei häufig zu Bränden oder Explosionen bzw. Verpuffungen in diesen Filteranlagen. Diese Art Brände sind häufig mit hohen Schäden an der Filteranlage verbunden, da sie in der Regel erst sehr spät bemerkt werden und abhängig von der Art des Aerosols häufig auch sehr schwer zu löschen sind, insbesondere wenn beispielsweise kleine Metallpartikel als Aerosolteilchen vorliegen und dementsprechend hohe Brandtemperaturen erreicht werden

Dokumente DE 198 47 971 A1 und DE 198 02 622 A1 offenbaren Verfahren zur Flammschutzverbesserung in Filteranlagen. Gemäß DE 198 47 971 A1, wird dem Abgasvolumenstrom der Filteranlagen u.a. Quarzsand kontinuierlich bzw. diskontinuierlich beigemischt, um Ansätze von brennbaren Materialien durch Abrieb zu entfernen. Ebenso wird in DE 198 02 622 A1, um explosive oder brennbare Staubluftströme zu reinigen, ein nicht explosives und unbrennbares Filterhilfsmittel im Luftstrom mitgeführt und in den Zuströmraum der Anlage transportiert, wo es sich an der Rohseite des Filterkörpers (Filterkerze) anlagert. Kalkstein und Feuerlöschpulver kommen als Filterhilfsmittel in Betracht.

### DIE ERFINDUNG

Der Erfindung liegt daher die Aufgabe zugrunde, ein Verfahren zur Flammschutzverbesserung anzugeben, welche das Risiko von Bränden und/oder Explosionen in Filteranlagen senken.

Die Aufgabe wird gelöst durch ein Verfahren zur Flammschutzverbesserung in Filteranlagen mit den Merkmalen des Anspruchs 1. Die Merkmale der abhängigen Ansprüche betreffen vorteilhafte Ausführungsformen.

Erfindungsgemäß ist ein Verfahren vorgesehen, bei dem ein mit einem brennbaren Aerosol belasteter Luftstrom dem Filter zugeführt wird, wobei der Filter das Aerosol aus dem Luftstrom zumindest zum wesentlichen Teil zurückhält, wobei ein granulares Flammschutzmittel dem dem Filter zugeführten Luftstrom zugeführt wird. Das granulare Flammschutzmittel verteilt sich dabei in dem Luftstrom und die Granulate wechselwirken mit dem Aerosol, wodurch die potentielle reaktive Oberfläche des Aerosols reduziert und dadurch die Entzündungsgefahr gesenkt wird. Das Flammschutzmittel wird dann mit dem Aerosol im Filter abgeschieden und kann dann gemeinsam mit dem abgeschiedenen Aerosol einer Entsorgung oder Verwertung zugeführt werden.

Das Flammschutzmittel weist dabei poröse mineralische Granulate, vorzugsweise auch plätzchen- und/ oder chipsförmige Bruchstücke der Granulate, als wesentlichen Bestandteil auf. Durch die Porosität weisen die Granulate eine hohe Oberfläche auf, die mit dem Aerosol wechselwirken kann und so in der Lage ist, große Mengen Aerosolteilchen zu binden. Das mineralische Material bietet dabei den Vorteil, selbst nicht entzündlich zu sein, so dass durch die Oberfläche des Flammschutzmittels selber keine neue Zündquelle hinzukommt. Damit wird durch die Flammschutzmittelpartikel im Luftstrom nicht nur die Gefahr des Brandes im Filter selbst, sondern auch bereits die Gefahr der Entzündung des Aerosols im Luftstrom auf dem Weg zum Filter reduziert.

Die Granulate weisen dabei vorzugsweise ein Porenvolumen von mehr als 80%, besonders vorzugsweise ein Porenvolumen von mehr als 90% auf. Dabei ist das Porenvolumen als der Quotient des Volumens der Poren eines Granulatkorns zu seinem Gesamtvolumen definiert. Derartig hochporöse Materialien haben zum einen den Vorteil, eine hohe Oberfläche zur Verfügung zu stellen, zum anderen werden sie aufgrund ihrer geringen Dichte problemlos vom Luftstrom mitgeführt, so dass ein ungewolltes Abscheiden aus dem Luftstrom verhindert werden kann.

Vorteilhafterweise weisen die Granulate Siliciumdioxid, insbesondere in Konzentrationen von 60 bis 80 Gew.-%, als wesentlichen Bestandteil auf. Dieses hat den Vorteil, neben seiner Reaktionsträgheit gesundheitlich unbedenklich zu sein und in der Natur als preiswerter Rohstoff in praktisch unbegrenzter Menge zur Verfügung zu stehen. Vorzugsweise handelt es sich dabei um Granulate aus geblähtem Perlitgestein. Aus natürlichem Perlitgestein, welches als natürlich vorkommender, kostengünstiger Rohstoff zur Verfügung steht, lässt sich in einem Blähprozess in einfacher Weise das geblähte Perlitgestein gewinnen. Hierfür ist es lediglich notwendig, das Perlitgestein so weit zu erhitzen, dass es zähflüssig wird, da das natürlich vorkommende Perlitgestein Wassereinlagerungen enthält, die bei diesem Prozess verdampfen und so ein hochporöses granulares Material erzeugen.

Vorzugsweise wird das Flammschutzmittel vor dem Zuführen zu dem Luftstrom oder im Luftstrom zerkleinert. Je kleiner die Granulate des Flammschutzmittels sind, desto leichter können sie vom Luftstrom mitgeschleppt werden und umso besser zugänglich sind die in den Poren gelegenen Oberflächen. Generell vergrößert sich die nutzbare Oberfläche des Flammschutzmittels. Die Zerkleinerung kann dabei in Form eines separaten Verfahrensschritts oder als Folge von Kollisionen der Granulate untereinander oder mit Hindernissen, beispielsweise Rohrwänden, im Luftstrom geschehen.

Bei dem Filter kann es sich um einen Kuchenfilter, einen Querstromfilter oder einen Tiefenfilter handeln. Dabei findet der Rückhalt der Teilchen bei einem Kuchenfilter in einem sich auf dem Filtermedium aufbauenden Filterkuchen statt. Bei einem Tiefenfilter werden die Teilchen am Filtermedium selber abgeschieden, nachdem sie in dieses eingedrungen sind, während bei einem Querstromfilter durch eine Anströmung des Filtermediums in einem flachen Winkel ein Kuchenaufbau sowie das Eindringen der Teilchen in das Filtermedium vermieden werden, um so einen niedrigen Druckverlust über dem Filtermedium zu ermöglichen.

Bei dem Filtermedium des Filters kann es sich um ein Filz, ein faserorientiertes Vlies, ein Spinnvlies, ein Wirrfaservlies, ein Mono- oder ein Polyfilamentgewebe handeln. Es kann aber ebenfalls ein poröser Festkörper als Filtermedium verwendet werden, beispielsweise eine Schüttung oder ein Sintermetall. Ebenso sind Membrane oder aus Garnen gewickelte Filtermedien denkbar. Vorteilhaft am erfindungsgemäßen Verfahren ist dabei, dass im Regelfall durch das zusätzliche Brandschutzmittel keine erhöhten Anforderungen an das Filtermedium gestellt werden müssen. Vielmehr ist in vielen Fällen, insbesondere bei Kuchen bildenden Filtern, zu erwarten, dass sich die Granulate des Flammschutzmittels positiv auf die Durchströmbarkeit des Filterkuchens auswirken bzw. bei nicht Kuchen bildenden Filtrationsverfahren ein Verkleben und Zusetzen des Filtermediums verhindern oder zumindest erschweren. Letzterer Vorteil kommt insbesondere dann zum Tragen, wenn es sich bei dem Aerosol um Kohlenwasserstoffe, insbesondere um Öle oder Fette handelt.

Das Flammschutzmittel kann beispielsweise in den folgenden Industriezweigen eingesetzt werden: Holz- und Holzwerkstoffverarbeitung, Papierverarbeitung und Druck, Kunststoffverarbeitung, Textil-, Leder-, Gummi-, Metallverarbeitung, Pneumatische Fördertechnik, Automobil- und Zubehörtechnik, Metallbearbeitung, Lasertechnologie, Chemie, Pharmazie, Entsorgung und Verwertung. In diesen Industriezweigen entstehen häufig mit festen oder flüssigen Aerosolen belastete Abluftströme, bei denen das Flammschutzmittel wirkungsvoll eingesetzt werden kann.

Generell kommen alle Aerosol belasteten Abluftströme für den Einsatz des Flammschutzmittels in Frage. Besonders vorteilhafte Anwendungsfelder ergeben sich allerdings bei Abluftströmen im Bereich der Lebensmitteltechnik, der Lebensmittelverfahrenstechnik, der chemischen, thermischen oder mechanischen Verfahrenstechnik sowie der Fertigungstechnik. Insbesondere in diesen technischen Gebieten entstehen Aerosol belastete Abluftströme, die häufig Öle, Fette oder andere Kohlenwasserstoffe enthalten und dadurch leicht brennbar sind, sich aber gut mit dem erfindungsgemäßen Flammschutzmittel binden lassen. Vorteilhaft ist dabei auch, wenn das Flammschutzmittel durch das Aerosol benetzbar ist, vorzugsweise das Aerosol mit dem Flammschutzwinkel einen Kontaktwinkel < 90° bildet. Hierdurch haftet das Aerosol besonders gut am Flammschutzmittel und kann schnell in die Poren der Granulate eindringen und/oder besser an Bruchstücken der Granulate anhaften, wodurch sich die an den Luftstrom angrenzende Oberfläche der Aerosolteilchen auf einen Bruchteil der ursprünglichen reduziert.

Beispiele für Verfahren aus dem Gebiet der Fertigungstechnik, bei denen Aerosol belastete Abluftströme anfallen, für die sich das erfindungsgemäße Verfahren zur Flammschutzverbesserung besonders eignet, sind beispielsweise Urformverfahren, also Verfahren, wie Gießen oder Sintern, bei denen aus formlosem Stoff ein Werkstück hergestellt wird. Hierbei liegen insbesondere Hilfsstoffe, die bei der Fertigung verdampfen, als Aerosol vor. Aber auch Umformverfahren, wie Schmieden, Walzen, Strangpressen, Tiefziehen, Druckumformverfahren, nach DIN 8583, Zugdruckumformverfahren nach DIN 8584, Zugumformverfahren nach DIN 8585, Biegeumformverfahren nach DIN 8586 und Schubumformverfahren nach DIN 8587 können Quellen Aerosol belasteter Abluftströme, beispielsweise aufgrund des Einsatzes von Trennmitteln, darstellen, bei denen die Erfindung vorteilhaft eingesetzt werden kann.

Weiterhin sind Trennverfahren, insbesondere spanende Bearbeitung mit geometrisch bestimmter oder unbestimmter Schneide, wie beispielsweise Bohren, Fräsen, Drehen, Sägen, Schleifen, Honen oder Läppen sowie Fügeverfahren, wie insbesondere Schweißen oder Löten, sämtliche Beschichtungsverfahren sowie Verfahren zur Änderung der Stoffeigenschaften, wie Härten, Glühen, Anlassen, Auslagern oder Vergüten Quellen von Abluftströmen, bei denen eine erfindungsgemäße Flammschutzverbesserung besonders vorteilhaft ist, da hier häufig sowohl beim Fertigungsverfahren verdampfte Hilfsmittel, die in der Regel Kohlenwasserstoffe beinhalten, als auch Metallpartikel in den Abluftströmen vorhanden sind, wodurch ein besonders hoher Bedarf für einen effektiven Flammschutz vorliegt.

### KURZBESCHREIBUNG DER ZEICHNUNGSABBILDUNGEN

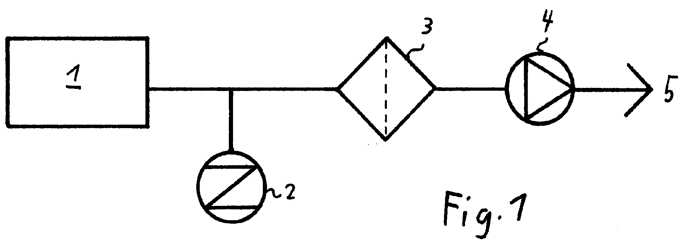

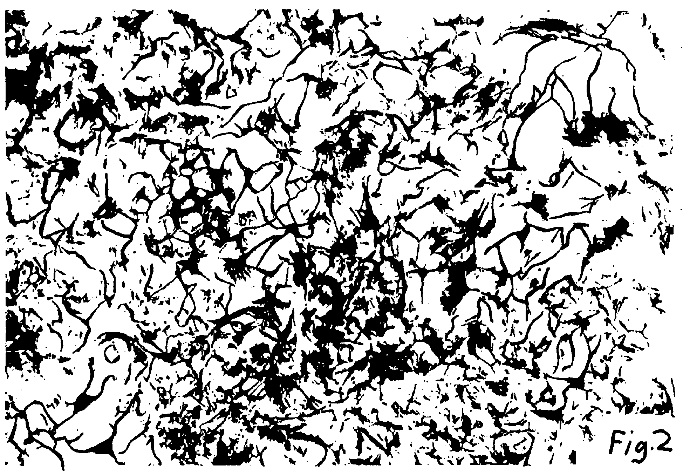

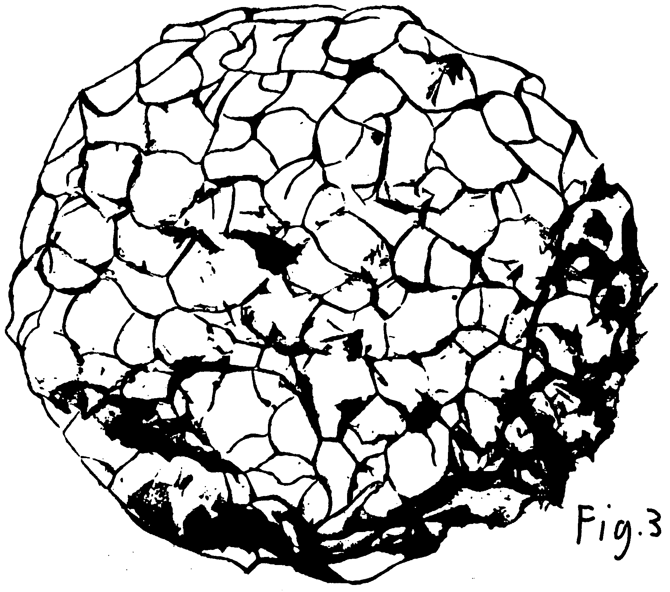

Die Erfindung wird im Folgenden anhand der Figuren 1 bis 5 schematisch näher erläutert. Es zeigen:
- Figur 1 -: ein schematisches Verfahrensfließbild eines beispielhaften erfindungsgemäßen Verfahrens,
- Figur 2 -: eine schematische Darstellung der Oberfläche eines beispielhaften Flammschutzmittels,
- Figur 3 -: eine schematische Darstellung eines einzelnen Granulats eines beispielhaften Flammschutzmittels mit seiner offenporigen Oberflächenstruktur,
- Figur 4 -: eine Rasterelektronenmikroskopaufnahme der Oberflächenstruktur eines beispielhaften Flammschutzmittels,
- Figur 5 -: die Rasterelektronenmikroskopaufnahme eines einzelnen Granulats eines beispielhaften Flammschutzmittels mit seiner offenporigen Oberflächenstruktur.

### BESTER WEG ZUR AUSFÜHRUNG DER ERFINDUNG

Bei dem beispielhaften Verfahren entsteht der mit dem Aerosol belastete Abluftstrom in einer beispielhaften verfahrens- und/oder fertigungstechnischen Einrichtung 1. Durch einen Zuteiler 2 für feste Stoffe wird dem Abluftstrom das beispielhafte Flammschutzmittel zugesetzt und gemeinsam mit dem Aerosol im Filter 3 abgeschieden. Bei dem beispielhaften Verfahren wird der Abluftstrom durch das Gebläse 4 gefördert, welches vorteilhafterweise im gezeigten Beispiel hinter dem Filter angeordnet ist. Der so gereinigte Abluftstrom kann beispielsweise über einen Reingasauslass 5 freigesetzt werden. Bei dem Zuteiler 1 kann es sich um einen beliebigen Injektor handeln, z.B. kann das Flammschutzmittel in den Abluftstrom eingedüst werden.

Bei dem beispielhaften Flammschutzmittel handelt es sich um geblähtes Perlitgestein. Durch Blähprozess erreicht das Perlitgestein eine Schüttdichte bei 20° von 70 +/- 20 kg/m³. Dabei entsteht im Inneren der Granulate des Perlitgesteins eine hohe Porosität mit einer offenen Porenstruktur, wobei die Porenöffnungen an der Oberfläche Durchmesser im Größenordnungsbereich von 5 bis 40 µm aufweisen. Da die Poren keine kreisrunde Form haben, ist der Begriff Durchmesser hier im Sinne eines Äquivalentdurchmessers zu sehen, d.h. als der Durchmesser, den eine Pore gleicher Größe bei kreisrunder Form aufweisen würde. Als Größe ist hier der Querschnitt der Porenöffnung zur Oberfläche eines Granulatteilchen hin anzusetzen, da die Größe einer solchen Öffnung maßgeblich für das mögliche Eindringen eines Aerosols in den porösen Granulatpartikel ist.

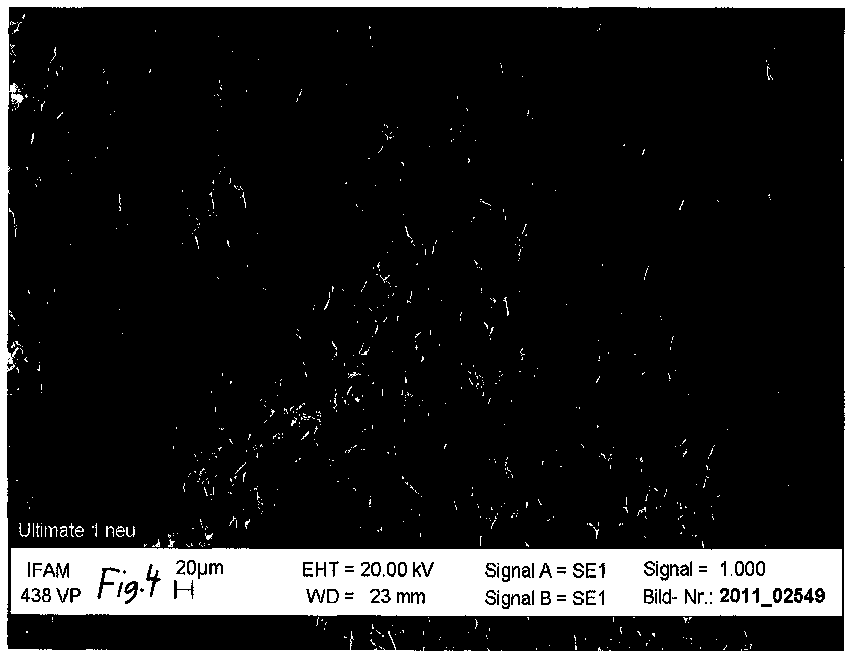

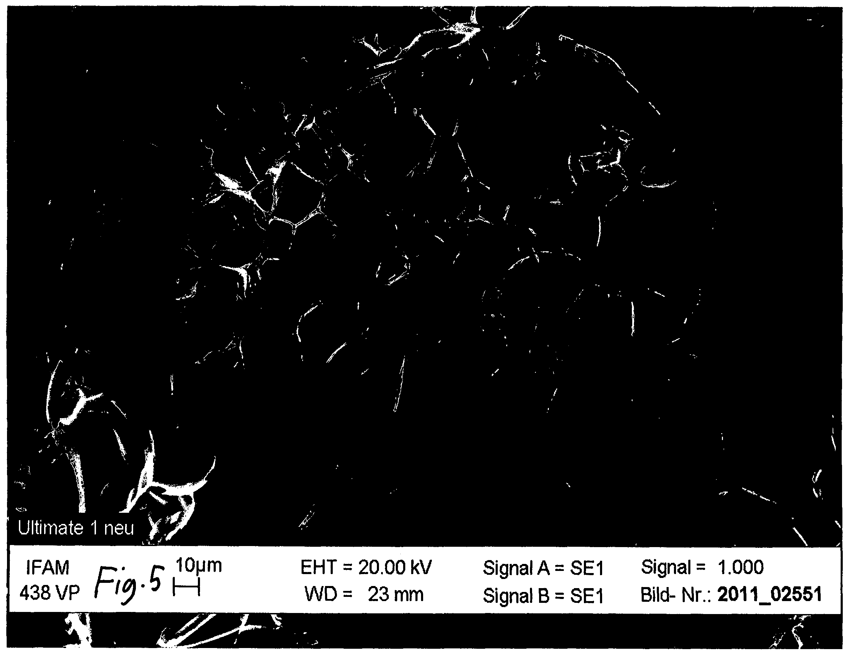

Im gezeigten vorteilhaften Fall weisen die Zellwände zwischen den Poren aufgrund der hohen erreichten Porosität der Granulate eine Wanddicke im Größenordnungsbereich von ungefähr einem µm auf. Diese sehr dünnen Zellwände aus hartem und sprödem Material sind leicht zerbrechlich, so dass - wie in Figur 4 und insbesondere in Figur 5 gut zu erkennen - eine Vielzahl abgebrochener, noch an den Granulaten anhaftender Zellwandfragmente vorliegt, die besonders gut an den Oberflächen, beispielsweise von feinen Öltröpfchen, anhaften und diese so mit einer Entzündungs hemmenden Schicht überziehen können.

## Patentansprüche

1. Verfahren zur Flammschutzverbesserung in Filteranlagen, bei dem ein mit einem brennbaren Aerosol belasteter Luftstrom einem Filter zugeführt wird, wobei der Filter das Aersol aus dem Luftstrom zumindest zum wesentlichen Teil zurückhält,
**dadurch gekennzeichnet,**
**dass** ein granulares Flammschutzmittel, das poröse mineralische Granulate als wesentlichen Bestandteil aufweist, dem dem Filter zugeführten Luftstrom zugeführt wird.

2. Verfahren nach Anspruch 2,
**dadurch gekennzeichnet,**
**dass** es sich bei den Granulaten um geblähtes Perlitgestein handelt.

3. Verfahren nach Anspruch 2 oder 3,
**dadurch gekennzeichnet,**
**dass** das Flammschutzmittel vor dem Zuführen zu dem Luftstrom oder im Luftstrom zerkleinert wird.

4. Verfahren nach einem der Ansprüche 1 bis 3,
**dadurch gekennzeichnet,**
**dass** es sich bei dem Aerosol um Kohlenwasserstoffe, insbesondere um Öle oder Fette handelt.

5. Verfahren nach einem der Ansprüche 1 bis 4,
**dadurch gekennzeichnet,**
**dass** der Luftstrom ein Abluftstrom im Bereich der Lebensmitteltechnik, der Lebensmittel-, der chemischen, thermischen oder mechanischen Verfahrenstechnik oder der Fertigungstechnik ist.

6. Verfahren nach einem der Ansprüche 1 bis 5,
**dadurch gekennzeichnet,**
**dass** es sich bei dem Filter um einen Kuchenfilter, einen Querstromfilter oder einen Tiefenfilter handelt.

7. Verfahren nach einem der Ansprüche 1 bis 6,
**dadurch gekennzeichnet,**
**dass** der Lufstrom beim Passieren des Filters zumindest teilweise durch ein Filtermedium hindurchtritt, wobei es sich bei dem Filtermedium vorzugsweise um ein Sieb, ein Filz, ein faserorierentiertes Vlies, ein Spinnvlies, ein Wirrfaservlies, eine Schüttung, einen poröse Festkörper, insbesondere ein Sintermetall, ein aus Garnen gewickeltes Filtermedium, eine Membran, ein Mono- oder Polyfilamentgewebe handet.

8. Verfahren nach einem der Ansprüche 1 bis 7,
**dadurch gekennzeichnet,**
**dass** das Flammschutzmittel durch das Aerosol benetzbar ist, vorzugsweise das Aerosol mit dem Flammschutzmittel einen Kontaktwinkel kleiner als 90° bildet.

9. Verfahren nach einem der Ansprüche 1 bis 8,
**dadurch gekennzeichnet,**
**dass** der Luftstrom aus dem Arbeitsbereich eines Urformverfahrens, eines Umformverfahrens, eines Trennverfahrens, eines Fügeverfahrens eines Beschichtungsverfahrens oder eines die Stoffeigenschaften ändernden Verfahrens ist.

## Claims

1. Method for improving the flame resistance in filter systems, in which an air stream charged with a combustible aerosol is supplied to a filter, wherein the filter retains at least the essential part of the aerosol from the air stream,
**characterised in that**
a granular flame retardant which has porous mineral granules as the essential constituent is supplied to the air stream supplied to the filter.

2. Method according to claim 2
**characterised in that**
the granulate is expanded perlite rock.

3. Method according to claim 2 or 3
**characterised in that**
the flame retardant is pulverised prior to it being supplied to the air stream or in the air stream.

4. Method according to one of claims 1 to 3
**characterised in that**
the aerosol comprises hydrocarbons, more particularly oils or greases.

5. Method according to one of claims 1 to 4
**characterised in that**
the air stream is an exhaust air stream in the field of food technology, food processing, chemical, thermal or mechanical processing technology or production technology.

6. Method according to one of claims 1 to 5
**characterised in that**
the filter is a cake filter, a transverse flow filter or a depth filter.

7. Method according to one of claims 1 to 6
**characterised in that**
the air stream when passing the filter passes a least in part through a filter medium wherein the filter medium is preferably a screen, a felt, a fibre-orientated fleece, a spun-bonded fleece material, a random laid nonwoven fabric, a loose bulk material, a porous solid body, in particular a sintered metal, a filter medium wound from yarns, a membrane, a mono or poly filament woven fabric.

8. Method according to one of claims 1 to 7
**characterised in that**
the flame retardant can be wetted by the aerosol, preferably the aerosol forms with the flame retardant a contact angle of less than 90 degrees.

9. Method according to one of claims 1 to 8
**characterised in that**
the air stream is from the work area of a forming process, a reforming process, a separating process, a joining process, a coating process or a process which is changing the material properties.

## Revendications

1. Procédé d'amélioration du pouvoir ignifuge dans une installation de filtrage, dans lequel un flux d'air chargé d'un aérosol combustible est conduit à un filtre, sachant que le filtre retient, au moins en partie essentielle, l'aérosol contenu dans le flux d'air,
**caractérisé en ce que**
un moyen d'ignifugation granulé, qui contient des granulés minéraux, poreux, est ajouté au flux d'air qui est conduit au filtre.

2. Procédé selon la revendication 1,
**caractérisé en ce que**
les granulés consistent en perlite soufflée.

3. Procédé selon revendication 2 ou 3,
**caractérisé en ce que**
le moyen d'ignifugation est réduit en petites particules avant d'être amené au ou dans le flux d'air.

4. Procédé selon l'une des revendications 1 à 3,
**caractérisé en ce que**
l'aérosol consiste en hydrocarbures, en particulier en huiles ou en graisses.

5. Procédé selon l'une des revendications 1 à 4,
**caractérisé en ce que**
le flux d'air est un échappement d'air du domaine de la technique des produits alimentaires, de la technique des procédés alimentaires, chimiques, thermiques ou mécaniques ou de la technique de production.

6. Procédé selon l'une des revendications 1 à 5,
**caractérisé en ce que**,
le filtre est un gâteau de filtration, un filtre à flux transversal ou un filtre en profondeur.

7. Procédé selon l'une des revendications 1 à 6,
**caractérisé en ce que**,
lors de son passage par le filtre, le flux d'air traverse, au moins partiellement, un moyen de filtrage, sachant que ledit moyen de filtrage est un tamis, un feutre, un non-tissé à fibres orientées, un non-tissé filé, un non-tissé à fibres embrouillées, un lit, un corps solide poreux, en particulier un métal fritté, un moyen de filtrage enroulé dans des fils, une membrane, un tissu monofilament ou polyfilament.

8. Procédé selon l'une des revendications 1 à 7,
**caractérisé en ce que**
le moyen d'ignifugation peut être humecté d'aérosol, l'aérosol formant avec ledit moyen d'ignifugation un angle de contact de préférence inférieur à 90°.

9. Procédé selon l'une des revendications 1 à 8,
**caractérisé en ce que**
le flux d'air est en provenance du domaine d'un procédé de formage primaire, d'un procédé de séparation, d'un procédé d'assemblage, d'un procédé de revêtement ou d'un procédé modifiant les propriétés des matières.
